# EUROPÄISCHE PATENTSCHRIFT

(11) **EP 3 947 991 B1**
(45) Veröffentlichungstag und Bekanntmachung des Hinweises auf die Patenterteilung: **12.11.2025**
(21) Anmeldenummer: 20709543.1
(22) Anmeldetag: 04.03.2020
(51) Int. Cl.: F16C 11/06, B60G 7/00, B60G 17/019

(54) **VERSCHLUSSELEMENT FÜR EIN KUGELGELENK UND KUGELGELENK MIT EINEM SOLCHEN VERSCHLUSSELEMENT**
LOCKING ELEMENT FOR A BALL JOINT AND BALL JOINT WITH SUCH A LOCKING ELEMENT
ÉLÉMENT DE VERROUILLAGE POUR UNE ROTULE ET ROTULE AVEC UN TEL ÉLÉMENT DE VERROUILLAGE

(30) Priorität: 02.04.2019 DE 102019204658
(43) Veröffentlichungstag der Anmeldung: 09.02.2022
(73) Patentinhaber: ZF Friedrichshafen AG, 88046 Friedrichshafen (DE)
(72) Erfinder: LAHRMANN, Tobias, 49086 Osnabrück (DE); DUETZ, Jan, 26434 Wangerland (DE); KRAMER, Thomas, 26133 Oldenburg (DE); BLANKE, Arnold, 49401 Damme (DE)
(74) Vertreter: ZF Friedrichshafen AG
(86) Internationale Anmeldenummer: PCT/EP2020/055717
(87) Internationale Veröffentlichungsnummer: WO 2020/200614

(56) Entgegenhaltungen:
- EP-A1- 1 173 685
- EP-B1- 1 173 685
- DE-A1- 10 161 671
- DE-A1- 102016 210 406
- DE-C1- 10 110 738
- DE-C5- 10 110 738
- US-A1- 2008 309 324
- US-A1- 2012 170 969

## Beschreibung

Die Erfindung betrifft ein Verschlusselement für ein Kugelgelenk in einem Fahrzeug und mit einer Aufnahme zum Anordnen einer elektronischen Komponente, wobei das Verschlusselement aus einem Metall und die Aufnahme aus einem Kunststoffmaterial gebildet ist, wobei die Aufnahme auf einer Seite des Verschlusselementes angespritzt ist, wodurch sich ein Hybridbauteil aus mindestens zwei unterschiedlichen Materialen ergibt. Des Weiteren betrifft die Erfindung ein Kugelgelenk mit einem solchen Verschlusselement.

Ein derartiges Verschlusselement bzw. Kugelgelenk ist aus der der DE 101 61 671 A1 bekannt. Hierbei sind an der Innenseite des Verschlusselementes mehrere elektronische Bauelemente angeordnet, die wahlweise von einem aus Kunststoff hergestellten Schutzelement vollständig abgedeckt sind. Dieses Dokument offenbart ein Verschlusselement gemäß dem Oberbegriff des Anspruchs 1.

Aus der DE 10 2016 215 416 A1 ist bekannt, dass das Verschlusselement aus Aluminium und die Aufnahme einstückig mit dem Verschlusselement ausgebildet sind. Die Aufnahme ist als eine hinterschnittige Umformung des Verschlusselementes selbst realisiert. Mit der Aufnahme des Verschlusselementes ist eine elektronische Komponente in der Gestalt eines Steckers mechanisch verbunden. Hierbei rastet der Stecker mittels einer Schnapp- und/oder Rastverbindung in die Aufnahme des Verschlusselementes ein.

Die DE 101 10 738 C1 offenbart ein Kugelgelenk mit einem in einer Bohrung beispielsweise eingespritzten Kunststoffeinsatz, der ein Sensorelement aufnimmt.

Der US 2008/0309324 A1 ist ein Kugelgelenk mit einer drehbaren Scheibe zu entnehmen, die ein Wellenende aufnehmen kann.

Der DE 10 2016 210 406 A1 ist ein Verschlusselement für ein Kugelgelenk in einem Fahrzeug und mit einer Aufnahme zum Anordnen einer elektronischen Komponente zu entnehmen.

Hierbei ist von Nachteil, dass die Bearbeitung des metallenen Verschlusselementes zum Ausbilden der Aufnahme aufgrund der hierfür nötigen Umformungen unerwünscht aufwendig und kostenintensiv ist.

Es ist die der Erfindung zu Grunde liegende Aufgabe, ein Verschlusselement und/oder ein Kugelgelenk der eingangs genannten Art derart weiterzuentwickeln, dass der Aufwand zur Herstellung einer Schnittstelle zwischen dem Verschlusselement und der elektronischen Komponente reduzierbar ist. Insbesondere soll eine alternative Ausführungsform bereitgestellt werden.

Die der Erfindung zu Grunde liegende Aufgabe wird mit einem Verschlusselement nach Anspruch 1 und mittels eines Kugelgelenks nach Anspruch 9 gelöst. Bevorzugte Weiterbildungen der Erfindung finden sich in den Unteransprüchen und in der nachfolgenden Beschreibung.

Das Verschlusselement ist für ein Kugelgelenk in einem Fahrzeug ausgebildet. Insbesondere ist das Verschlusselement und/oder das Kugelgelenk für ein Fahrwerkbauteil in einem Fahrwerk eines Kraftfahrzeugs ausgebildet. Somit kann das Kugelgelenk und/oder das Verschlusselement ein Bestandteil eines Fahrwerks und/oder eines Fahrwerkbauteils sein. Im Fahrzeugbau kommen Kugelgelenke auf vielfältige Weise zum Einsatz. Insbesondere im Fahrwerk dienen Kugelgelenke dazu, Fahrwerkbauteile oder -komponenten, wie beispielsweise Lenker, Radträger, Spurstangen oder dergleichen gelenkig miteinander oder mit dem Fahrzeugaufbau oder einem daran befestigten Achsträger zu verbinden.

Das Verschlusselement weist eine Aufnahme zum Anordnen einer elektronischen Komponente auf. Insbesondere ist die elektronische Komponente als ein Sensorelement, ein Stecker oder eine Steckerverbindung ausgebildet. Die elektronische Komponente kann mit einem Magneten oder einer weiteren elektronischen Komponente zum Ausbilden einer Sensoreinrichtung zusammenwirken. Beispielsweise kann der Magnet oder die weitere elektronische Komponente einem Gelenkinnenteil des Kugelgelenks zugeordnet sein. Mittels einer solchen Sensoreinrichtung kann beispielsweise die Lage des Gelenkinnenteils in dem Kugelgelenk bestimmt werden. Eine entsprechende Sensoreinrichtung kann als eine Winkelsensoreinrichtung ausgebildet sein.

Die Aufnahme ist aus einem Kunststoffmaterial gebildet und auf einer Seite des Verschlusselementes angespritzt.

Hierbei ist von Vorteil, dass die Aufnahme zum Anordnen der elektronischen Komponente nicht durch Umformen des, insbesondere metallenen, Verschlusselementes hergestellt werden muss. Stattdessen kann die Aufnahme in der jeweils gewünschten Gestalt aus einem Kunststoffmaterial auf eine Seite des Verschlusselementes angespritzt werden. Hierdurch ist der Aufwand bzw. sind die Kosten zum Herstellen einer Schnittstelle zwischen dem Verschlusselement und der elektronischen Komponente reduzierbar. Insbesondere ist die Aufnahme und/oder ist das Kunststoffmaterial ausschließlich auf einer Seite und/oder auf einer einzigen Seite des Verschlusselementes angespritzt. Hierbei kann die Aufnahme nur in einem Teilbereich der Seite des Verschlusselementes angespritzt sein. Somit kann ein weiterer Teilbereich der Seite des Verschlusselementes nicht von dem Kunststoffmaterial bedeckt sein.

Erfindungsgemäß ist die Seite des Verschlusselementes mit der Aufnahme als eine Außenseite ausgebildet. Bei einem Kugelgelenk mit dem Verschlusselement ist die Aufnahme auf einer Seite des Verschlusselementes angeordnet sein, die von einem Gelenkinnenteil des Kugelgelenks abgewandt ist. Hiebei ist die Seite als eine Fläche oder Ebene ausgebildet. Hierdurch ergibt sich ein flacher oder ebener Kontaktbereich zwischen der Seite des Verschlusselementes und der Aufnahme und/oder dem Kunststoffmaterial der Aufnahme.

Gemäß einer Weiterbildung ragt ein Rand des Verschlusselementes über die Aufnahme hinaus. Insbesondere ragt der Rand des Verschlusselementes radial zu einer Mittellängsachse des Verschlusselementes über die Aufnahme hinaus. Vorzugsweise ist der Rand zum Halten des Verschlusselementes an einem Gelenkgehäuse ausgebildet. Hierbei kann das Kugelgelenk und/oder das Fahrwerkbauteil das Gelenkgehäuse aufweisen. Der herausragende und/oder hinausstehende Rand des Verschlusselementes ist somit ein Teilbereich des Verschlusselementes und/oder der Seite des Verschlusselementes, der bzw. die nicht von dem Kunststoffmaterial der Aufnahme bedeckt. Somit kann der herausragende und/oder hinausstehende Rand des Verschlusselementes in direktem Kontakt mit dem Gelenkgehäuse zum Verbinden des Verschlusselementes mit dem Gelenkgehäuse stehen. Der Rand des Verschlusselementes kann mit dem Gelenkgehäuse zum Halten des Verschlusselementes an dem Gelenkgehäuse, vorzugsweise unmittelbar, zusammenwirken. Insbesondere ist der Rand in einer Haltenut des Gelenkgehäuses angeordnet und/oder geklemmt. Hierbei kann die Haltenut des Gelenkgehäuses mittels einer Umformung und/oder einer Verrollung hergestellt sein. Der Rand des Verschlusselementes kann kreisförmig oder ringartig ausgebildet sein.

Vorzugsweise ist zwischen der Seite des Verschlusselementes und der Aufnahme eine stoffschlüssige Verbindung ausgebildet. Somit kann die Aufnahme stoffschlüssig mit der Seite des Verschlusselementes verbunden sein. Insbesondere ist zwischen der Seite des Verschlusselementes und der Aufnahme ein Haftvermittler angeordnet. Alternativ oder zusätzlich kann die Seite des Verschlusselementes in dem für die Kontaktierung mit der Aufnahme vorgesehenen Bereich oder Teilbereich mittels eines Plasmaverfahrens vorbehandelt sein. Mittels eines Haftvermittlers und/oder einer Plasmabehandlung ist die stoffschlüssige Verbindung zwischen dem, insbesondere metallenen, Verschlusselement und der Aufnahme aus dem Kunststoffmaterial verbessert. Insbesondere ist hierdurch die Festigkeit und/oder Belastbarkeit der stoffschlüssigen Verbindung optimiert.

Nach einer weiteren Ausführungsform ist zwischen dem Verschlusselement und der Aufnahme eine formschlüssige Verbindung ausgebildet. Insbesondere ist die Verbindung zwischen dem Verschlusselement und der Aufnahme sowohl stoffschlüssig als auch formschlüssig realisiert. Hierbei kann die formschlüssige Verbindung mittels eines Hinterschnitts des Verschlusselementes realisiert sein.

Zum Realisieren der formschlüssigen Verbindung kann die Seite des Verschlusselementes eine im Querschnitt, insbesondere mittig zu einer Mittellängsachse des Verschlusselementes angeordnete, T-förmige oder pilzkopfartige Erhebung aufweisen.

An diese Erhebung und/oder um diese Erhebung herum kann die Aufnahme angespritzt sein. Vorzugsweise greift die Aufnahme zum Ausbilden der formschlüssigen Verbindung radial zu der Mittellängsachse des Verschlusselementes in eine Nut der Erhebung ein. Insbesondere ist die Nut ringartig oder ringförmig ausgebildet. Somit kann die Nut derart realisiert sein, dass diese die Mittellängsachse radial umläuft.

Gemäß einer Weiterbildung ist in dem Verschlusselement mindestens ein Durchbruch angeordnet. Durch den Durchbruch kann sich das Kunststoffmaterial der Aufnahme zum Ausbilden der formschlüssigen Verbindung hindurch erstrecken. Insbesondere kann der Durchbruch mittels des Kunststoffmaterials der Aufnahme ausgefüllt sein. Hierdurch ist eine feste Verbindung der Aufnahme mit dem Verschlusselement auf einfache und effektive Weise realisierbar.

Nach einer weiteren Ausführungsform ist die Aufnahme zum Zusammenwirken mit einem Halteelement zum Festsetzen der elektronischen Komponente in der Aufnahme ausgebildet. Insbesondere ist das Halteelement als ein separates Bauteil realisiert. Die Aufnahme und das Halteelement können mittels einer Rast- und/oder Schnappverbindung fest, insbesondere lösbar, miteinander verbindbar sein.

Das Verschlusselement kann als ein Verschlussdeckel oder als ein Verschlussring ausgebildet sein. Das Verschlusselement ist aus einem Metall oder Aluminium gebildet. Hierdurch ergibt sich in Kombination mit der angespritzten Aufnahme aus dem Kunststoffmaterial ein Hybridbauteil, das aus mindestens zwei unterschiedlichen Materialien hergestellt ist.

Von besonderem Vorteil ist ein Kugelgelenk mit einem erfindungsgemäßen Verschlusselement. Insbesondere weist das Kugelgelenk ein Gelenkgehäuse auf. Hierbei ist das Verschlusselement in dem Gelenkgehäuse festgesetzt. Vorzugsweise ist das Gelenkgehäuse mittels des Verschlusselementes verschlossen. Des Weiteren weist das Kugelgelenk ein Gelenkinnenteil auf, das beweglich in dem Gelenkgehäuse gelagert ist. Hierbei kann zwischen dem Gelenkgehäuse und dem Gelenkinnenteil eine Gelenkschale angeordnet sein. Das Gelenkinnenteil kann als ein Kugelzapfen oder eine Kugelhülse ausgebildet sein. Ein Zapfenabschnitt des Gelenkinnenteils kann aus dem Gelenkgehäuse herausragen. Des Weiteren kann das Gelenkgehäuse wenigstens einseitig offen ausgebildet sein.

Vorzugsweise weist das Kugelgelenk eine Gelenkachse und/oder eine Mittellängsachse auf, um die das Kugelgelenk und/oder das Gelenkinnenteil bewegbar ist. Vorzugsweise erstreckt sich die Gelenkachse und/oder die Mittellängsachse in axialer Richtung des Gelenkgehäuses. Insbesondere ist das Kugelgelenk und/oder das Gelenkinnenteil rotationssymmetrisch in Bezug zu der Gelenkachse und/oder der Mittellängsachse ausgebildet. Die Gelenkachse und/oder die Mittellängsachse kann durch einen Mittelpunkt des, insbesondere kugelartigen oder kugelförmigen, Gelenkinnenteils, vorzugsweise einer Gelenkkugel des Gelenkinnenteils, verlaufen.

Im Rahmen der vorliegenden Anmeldung kann der Ausdruck "radial" eine oder jedwede Richtung kennzeichnen, die senkrecht zur axialen Richtung des Kugelgelenks, der Gelenkachse und/oder der Mittellängsachse verläuft. Insbesondere ist das Gelenkinnenteil drehbar und/oder kippbar in dem Gelenkgehäuse und/oder der Gelenkschale gelagert.

Vorzugsweise ist unter einer bewegbaren und/oder gelenkigen Lagerung des Gelenkinnenteils in dem Gelenkgehäuse und/oder in der Gelenkschale eine Schwenkbeweglichkeit, Kippbeweglichkeit und/oder Drehbeweglichkeit zu verstehen. Unter "Kippen" oder "Verkippen" des Gelenkinnenteils wird insbesondere eine Bewegung des Gelenkinnenteils relativ zu dem Gelenkgehäuse verstanden, bei welcher eine Veränderung eines zwischen einer Gelenkinnenteillängsachse und einer Gehäuselängsachse eingeschlossenen Winkels eintritt. Unter "Drehen" oder "Verdrehen" des Gelenkinnenteils wird insbesondere eine Bewegung des Gelenkinnenteils verstanden, bei welcher das Gelenkinnenteil relativ zu dem Gelenkgehäuse um die Gelenkinnenteillängsachse gedreht wird.

Nachfolgend wird die Erfindung anhand der Figuren näher erläutert. Hierbei beziehen sich gleiche Bezugszeichen auf gleiche, ähnliche oder funktional gleiche Bauteile oder Elemente. Es zeigen:
- Fig. 1: eine perspektivische Seitenansicht eines ersten erfindungsgemäßen Verschlusselementes,
- Fig. 2: eine weitere perspektivische Seitenansicht des ersten erfindungsgemäßen Verschlusselementes gemäß Fig. 1 mit einem zusätzlichen Halteelement,
- Fig. 3: eine perspektivische Seitenansicht eines erfindungsgemäßen Kugelgelenks,
- Fig. 4: eine geschnittene Seitenansicht des erfindungsgemäßen Kugelgelenks gemäß Fig. 3,
- Fig. 5: eine perspektivische Seitenansicht eines weiteren Verschlusselementes, das nicht Teil der beanspruchten Erfindung ist und
- Fig. 6: eine geschnittene Seitenansicht des weiteren Verschlusselementes gemäß Fig. 5.

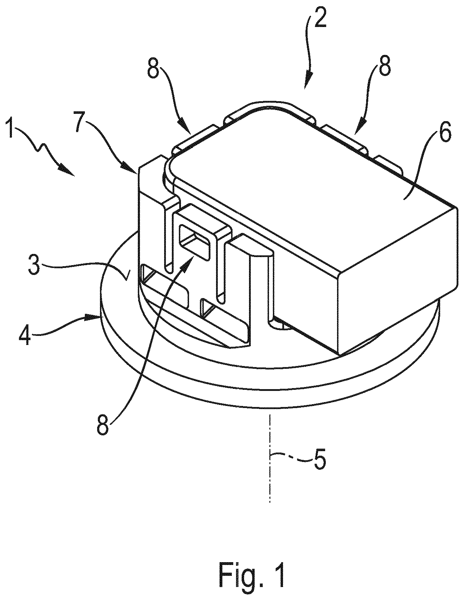

Figur 1 zeigt eine perspektivische Seitenansicht eines ersten erfindungsgemäßen Verschlusselementes 1. Bei diesem Ausführungsbeispiel ist das Verschlusselement 1 als ein Verschlussdeckel ausgebildet, wobei das Verschlusselement 1 hier beispielhaft aus Aluminium hergestellt ist. Des Weiteren weist das Verschlusselement 1 eine Aufnahme 2 auf. Die Aufnahme 2 ist aus einem Kunststoffmaterial gebildet. Des Weiteren ist die Aufnahme 2 auf einer Seite 3 des Verschlusselementes 1 angespritzt.

Somit ergibt sich insgesamt ein Hybridbauteil aus dem metallenen Verschlusselement 1 in Kombination mit der Aufnahme 2 aus dem Kunststoffmaterial. Bei diesem Ausführungsbeispiel ist die Aufnahme 2 stoffschlüssig mit der Seite 3 des Verschlusselementes 1 verbunden. Zur Verbesserung der stoffschlüssigen Verbindung kann ein Haftvermittler eingesetzt werden oder vor dem Anspritzen der Aufnahme 2 eine Plasmavorbehandlung des zur Kontaktierung mit dem Kunststoffmaterial für die Aufnahme 2 vorgesehen Teilbereichs der Seite 3 erfolgt sein.

Das Verschlusselement 1 weist einen Rand 4 auf. Der Rand 4 ragt radial zu einer Mittellängsachse 5 des Verschlusselementes 1 über die Aufnahme 2 nach außen hinaus. Der Rand 4 ist zum Halten des Verschlusselementes 1 an einem hier nicht näher dargestellten Gelenkgehäuse ausgebildet.

Die Aufnahme 2 ist zum Anordnen einer elektronischen Komponente 6 ausgebildet. Bei diesem Ausführungsbeispiel ist die elektronische Komponente 6 als ein Sensorelement realisiert.

Die Aufnahme 2 weist bei diesem Ausführungsbeispiel eine im Wesentlichen U-förmige Umrandung 7 auf. Die elektronische Komponente 6 weist eine korrespondierend zu der Umrandung 7 ausgebildete Außenkontur bzw. Gestalt auf, wobei die elektronische Komponente 6 in die Umrandung 7 eingesetzt ist. Aufgrund der U-förmigen Gestaltung der Umrandung 7 weist diese drei Seiten auf. Jede der drei Seiten der Umrandung 7 weist eine Rastöffnung 8 auf.

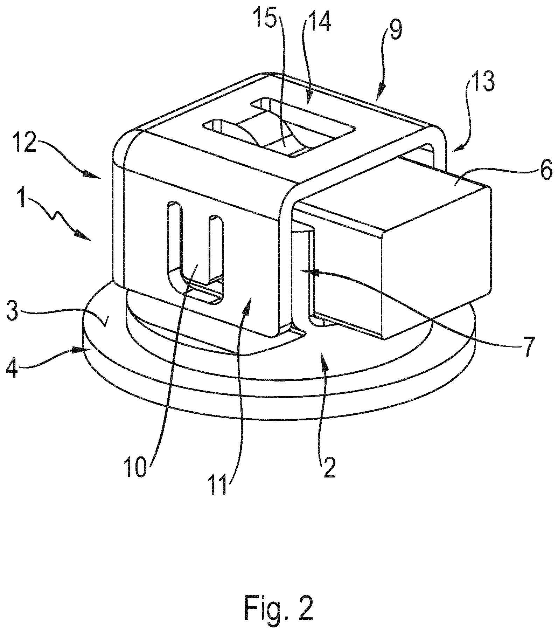

Figur 2 zeigt eine weitere perspektivische Seitenansicht des ersten erfindungsgemäßen Verschlusselementes 1 gemäß Figur 1 mit einem zusätzlichen Halteelement 9. Das Halteelement 9 ist im Wesentlichen kappenartig ausgebildet. Hierbei ist das Halteelement 9 über die Umrandung 7 der Aufnahme 2 gestülpt.

Das Halteelement 9 ist mittels einer Rast- und/oder Schnappverbindung mit der Aufnahme 2 verbunden. Hierzu weist das Halteelement 9 Raststege 10 auf. Die Raststege 10 des Halteelementes 9 sind derart angeordnet und ausgebildet, dass diese in die Rastöffnungen 8 der Umrandung 7 der Aufnahme 2 eingreifen. In dieser Darstellung ist lediglich einer der Raststege 10 zu erkennen. Die Raststege 10 sind in drei Seitenbereichen 11, 12, 13 des Halteelementes 9 angeordnet. Die drei Seitenbereiche 11, 12, 13 sind korrespondierend zu der Umrandung 7 U-förmig zueinander angeordnet.

Das Halteelement 9 weist einen Deckelbereich 14 auf, der von der Aufnahme 2 bzw. dem Verschlusselement 1 abgewandt ist. Zudem verbindet der Deckelbereich 14 sämtliche Seitenbereiche 11, 12, 13 miteinander. In dem Deckelbereich 14 ist bei diesem Ausführungsbeispiel ein Federsteg 15 angeordnet. Der Federsteg 15 stützt sich auf der elektronischen Komponente 6 ab. Hierzu ist der Federsteg 15 aus einer Ebne des Deckelbereichs 14 in Richtung der elektronische Komponente 6 gebogen. Hierdurch ist zum einen die elektronische Komponente 6 zusätzlich in der Aufnahme 2 gesichert und zum anderen wirkt auf die Verbindung des Halteelementes 9 mit der Aufnahme 2 eine Vorspannung, wodurch diese gegen ein unerwünschtes Lösen ebenfalls zusätzlich gesichert ist.

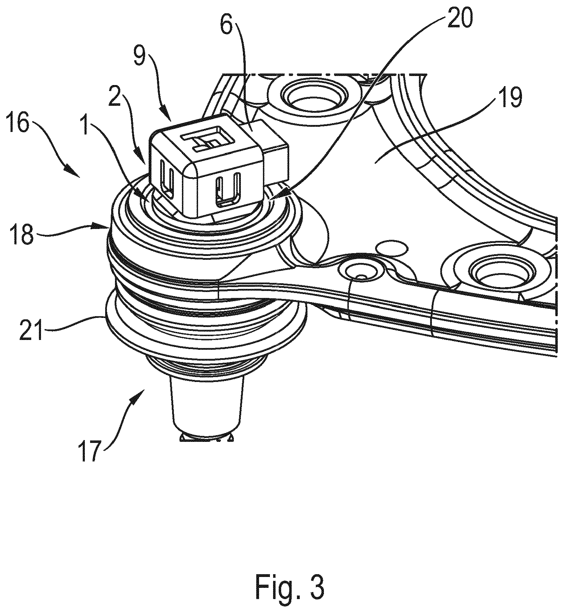

Figur 3 zeigt eine perspektivische Seitenansicht eines erfindungsgemäßen Kugelgelenks 16. Das Kugelgelenk 16 weist ein Verschlusselement 1 gemäß Figuren 1 und 2 auf. Hierbei ist die elektronische Komponente 6 mittels des zusätzlichen Halteelementes 9 zuverlässig in der Aufnahme 2 gehalten.

Das Kugelgelenk 16 ist bei diesem Ausführungsbeispiel als ein Kugelzapfengelenk realisiert. Das Kugelgelenk 16 hat ein Gelenkinnenteil 17, das hier als ein Kugelzapfen realisiert ist. Das Gelenkinnenteil 17 ist gelenkbeweglich in einem Gelenkgehäuse 18 angeordnet bzw. gelagert. Das Gelenkgehäuse 18 ist hier beispielhaft zugleich ein integraler Bestandteil eines Fahrwerkbauteils 19. Das Fahrwerkbauteil 19 und das Gelenkgehäuse 18 sind einstückig ausgebildet. Bei dem Fahrwerkbauteil 19 handelt es sich hier beispielhaft um einen Lenker für ein Fahrwerk eines hier nicht näher dargestellten Kraftfahrzeugs.

Mittels des Verschlusselementes 1 ist eine Öffnung 20 des Gelenkgehäuses 18 verschlossen. Des Weiteren weist das Kugelgelenk 16 einen üblichen Dichtungsbalg 21 auf.

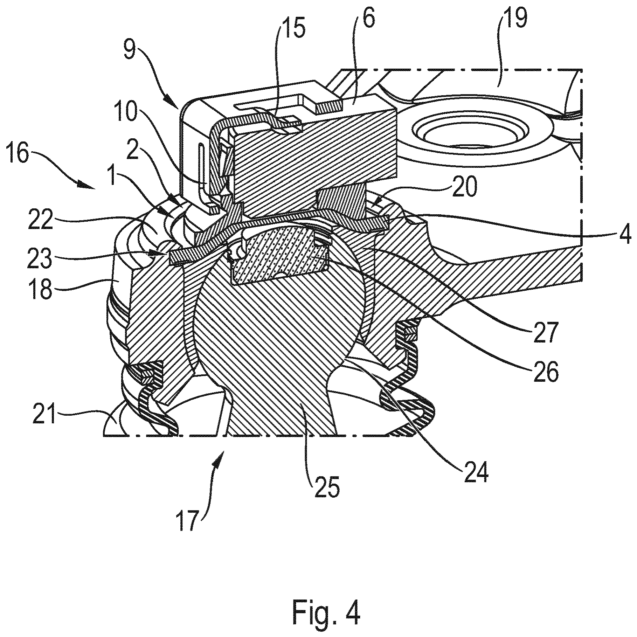

Figur 4 zeigt eine geschnittene Seitenansicht des erfindungsgemäßen Kugelgelenks 16 gemäß Figur 3. Zum Festsetzen des Verschlusselementes 1 an dem Gelenkgehäuse 18 ist das Verschlusselement 1 in die Öffnung 20 eingesetzt und ein Gehäuserand 22 des Gelenkgehäuses 18 zum Ausbilden einer Haltenut 23 um den Rand 4 des Verschlusselementes 1 umgeformt bzw. umgebördelt.

Das Gelenkinnenteil 17 weist eine Gelenkkugel 24 auf. Ausgehend von der Gelenckugel 24 erstreckt sich ein Gelenkzapfen 25 des Gelenkinnenteils 17 aus dem Gelenkgehäuse 18 heraus. Die mittels des Verschlusselementes 1 verschlossene Öffnung 20 ist auf einer von dem Gelenkzapfen 25 abgewandten Seite des Gelenkgehäuses 18 angeordnet.

An einer von dem Gelenkzapfen 25 abgewandten Stirnseite der Gelenkkugel 24 ist bei diesem Ausführungsbeispiel ein Magnet 26 in die Gelenkkugel 24 integriert. Der Magnet 26 wirkt mit der elektronischen Komponente 6 zum Ausbilden einer Sensoreinrichtung zusammen.

Bei diesem Ausführungsbeispiel ist zwischen dem Gelenkgehäuse 18 und der Gelenkkugel 24 eine Gelenkschale 27 angeordnet. Die Gelenkschale 27 ist aus einem reibungsoptimierten Kunststoff gebildet.

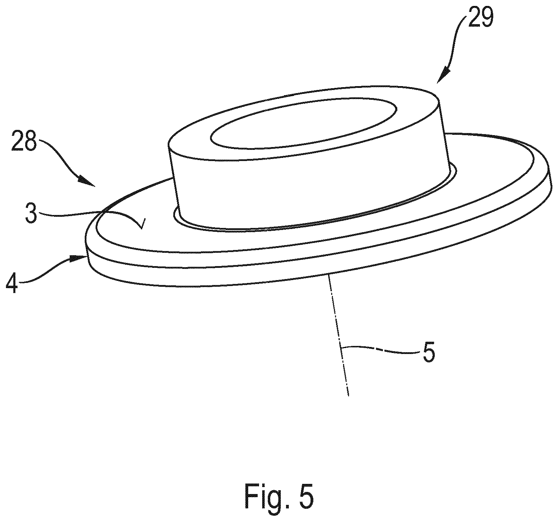

Figur 5 zeigt eine perspektivische Seitenansicht eines weiteren Verschlusselementes 28, das nicht Teil der beanspruchten Erfindung ist.

Das Verschlusselement 28 entspricht weitgehend dem Verschlusselement 1 gemäß Figuren 1 bis 3. Insoweit wird auch auf die vorangegangene Beschreibung verwiesen.

Das Verschlusselement 28 weist eine Aufnahme 29 auf. Die Aufnahme 29 ist hier lediglich beispielhaft oder im Sinne eines Platzhalters ringartig ausgebildet. Alternativ kann die Aufnahme 29 im Wesentlichen wie die Aufnahme 2 gemäß Figuren 1 bis 3 realisiert sein. Die Aufnahme 29 ist ebenfalls aus einem Kunststoffmaterial gebildet und auf der Seite 3 des Verschlusselementes 28 angespritzt.

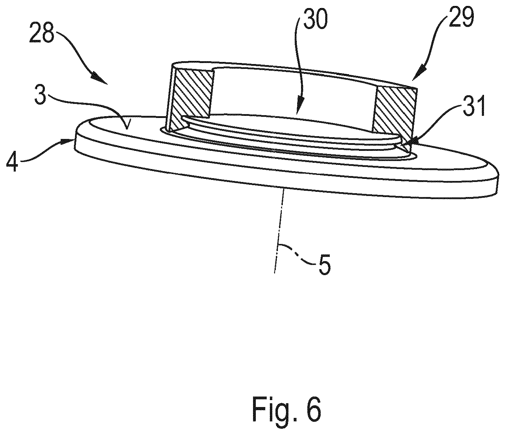

Figur 6 zeigt eine geschnittene Seitenansicht des weiteren Verschlusselementes 28 gemäß Figur 5. Abweichend zu dem Verschlusselement 1 gemäß Figuren 1 bis 4 weist das hier gezeigte Verschlusselement 28 auf der Seite 3 eine Erhebung 30 auf.

Die Erhebung 30 ist bezüglich ihres Querschnittes im Wesentlichen T-förmig oder pilzkopfartig ausgebildet. Die Erhebung 30 dient zum Ausbilden einer, insbesondere zusätzlichen, formschlüssigen Verbindung zwischen dem Verschlusselement 28 und der Aufnahme 29. Die Erhebung 30 bildet zusammen mit der Seite 3 eine Nut 31 bzw. einen Hinterschnitt. Die Nut 31 ist ringartig ausgebildet und umläuft die Mittellängsachse 5 des Verschlusselementes 1 radial. Die Aufnahme 29 bzw. das Kunststoffmaterial der Aufnahme 29 greift radial zu der Mittellängsachse 5 in die Nut 31 ein. Somit ist ein zuverlässiger Formschluss zwischen der Aufnahme 29 und dem Verschlusselement 28 gewährleistet.

### Bezugszeichen

- 1: Verschlusselement
- 2: Aufnahme
- 3: Seite
- 4: Rand
- 5: Mittellängsachse
- 6: elektronische Komponente
- 7: Umrandung
- 8: Rastöffnung
- 9: Halteelement
- 10: Raststeg
- 11: Seitenbereich
- 12: Seitenbereich
- 13: Seitenbereich
- 14: Deckelbereich
- 15: Federsteg
- 16: Kugelgelenk
- 17: Gelenkinnenteil
- 18: Gelenkgehäuse
- 19: Fahrwerkbauteil
- 20: Öffnung
- 21: Dichtungsbalg
- 22: Gehäuserand
- 23: Haltenut
- 24: Gelenkkugel
- 25: Gelenkzapfen
- 26: Magnet
- 27: Gelenkschale
- 28: Verschlusselement
- 29: Aufnahme
- 30: Erhebung
- 31: Nut

## Patentansprüche

1. Verschlusselement für ein Kugelgelenk (16) in einem Fahrzeug und mit einer Aufnahme (2, 29) zum Anordnen einer elektronischen Komponente (6), wobei das Verschlusselement (1) aus einem Metall und die Aufnahme (2, 29) aus einem Kunststoffmaterial gebildet ist, wobei die Aufnahme (2, 29) auf einer Seite (3) des Verschlusselementes (1) angespritzt ist, wodurch sich ein Hybridbauteil aus mindestens zwei unterschiedlichen Materialen ergibt, wobei die Seite (3) eine Fläche oder Ebene ist, **dadurch gekennzeichnet, dass** die Seite (3) des Verschlusselementes (1, 28) mit der Aufnahme (2, 29) als eine Außenseite ausgebildet ist, wobei die Aufnahme (2, 29) eine U-förmige Umrandung (7) aufweist und die elektronische Komponente (6) in die Umrandung (7) eingesetzt ist.

2. Verschlusselement nach Anspruch 1, **dadurch gekennzeichnet, dass** ein Rand (4) des Verschlusselementes (1, 28), insbesondere radial zu einer Mittellängsachse (5) des Verschlusselementes (1, 28), über die Aufnahme (2, 29) hinausragt, vorzugsweise ist der Rand (5) zum Halten des Verschlusselementes (1, 28) an einem Gelenkgehäuse (18) ausgebildet.

3. Verschlusselement nach einem der vorhergehenden Ansprüche, **dadurch gekennzeichnet, dass** zwischen der Seite (3) des Verschlusselementes (1, 28) und der Aufnahme (2, 29) eine stoffschlüssige Verbindung ausgebildet ist, insbesondere ist zwischen der Seite (3) des Verschlusselementes (1, 28) und der Aufnahme (2, 29) ein Haftvermittler angeordnet und/oder die Seite (3) des Verschlusselementes (1, 28) ist in dem für die Kontaktierung mit der Aufnahme (2, 29) vorgesehenen Bereich mittels eines Plasmaverfahrens vorbehandelt.

4. Verschlusselement nach einem der vorhergehenden Ansprüche, **dadurch gekennzeichnet, dass** zwischen dem Verschlusselement (28) und der Aufnahme (29) eine formschlüssige Verbindung ausgebildet ist, insbesondere ist die formschlüssige Verbindung mittels eines Hinterschnitts des Verschlusselementes (28) realisiert.

5. Verschlusselement nach Anspruch 4, **dadurch gekennzeichnet, dass** die Seite (3) des Verschlusselementes (28) eine im Querschnitt, insbesondere mittig zu einer Mittellängsachse (5) des Verschlusselementes (1) angeordnete, T-förmige oder pilzkopfartige Erhebung (30) aufweist, vorzugsweise greift die Aufnahme (29) zum Ausbilden der formschlüssigen Verbindung radial zu einer Mittellängsachse (5) des Verschlusselementes (28) in eine Nut (31) der Erhebung (30) ein.

6. Verschlusselement nach Anspruch 4 oder 5, **dadurch gekennzeichnet, dass** in dem Verschlusselement (1, 28) mindestens ein Durchbruch angeordnet ist, durch den sich das Kunststoffmaterial der Aufnahme (2, 29) zum Ausbilden der formschlüssigen Verbindung hindurch erstreckt und/oder der mittels des Kunststoffmaterials der Aufnahme (2, 29) ausgefüllt ist.

7. Verschlusselement nach einem der vorhergehenden Ansprüche, **dadurch gekennzeichnet, dass** die Aufnahme (2) zum Zusammenwirken mit einem Halteelement (9) zum Festsetzen der elektronischen Komponenten (6) in der Aufnahme (2) ausgebildet ist, insbesondere sind die Aufnahme (2) und das Halteelement (9) mittels einer Rast- und/oder Schnappverbindung fest miteinander verbindbar.

8. Verschlusselement nach einem der vorhergehenden Ansprüche, **gekennzeichnet durch** eine Ausbildung als ein Verschlussdeckel oder als ein Verschlussring.

9. Kugelgelenk mit einem Verschlusselement (1, 28) nach einem der vorhergehenden Ansprüche, mit einem Gelenkgehäuse (18), wobei das Verschlusselement (1, 28) in dem Gelenkgehäuse (18) festgesetzt ist, und mit einem Gelenkinnenteil (17), das beweglich in dem Gelenkgehäuse (18) gelagert ist, wobei die Seite (3) des Verschlusselementes (1, 28) mit der Aufnahme (2, 29) von dem Gelenkinnteil (17) abgewandt ist und die Aufnahme (2, 29) eine U-förmige Umrandung aufweist und die elektronische Komponente (6) in die Umrandung (7) eingesetzt ist.

## Claims

1. Closure element for a ball joint (16) in a vehicle and having a receptacle (2, 29) for arrangement of an electronic component (6), wherein the closure element (1) is formed from a metal and the receptacle (2, 29) is formed from a plastic material, wherein the receptacle (2, 29) is injection-moulded onto one side (3) of the closure element (1), which results in a hybrid component composed of at least two different materials, wherein the side (3) is a surface or plane, **characterized in that** the side (3) of the closure element (1, 28) with the receptacle (2, 29) is formed as an outer side, wherein the receptacle (2, 29) has a U-shaped border (7) and the electronic component (6) is inserted into the border (7).

2. Closure element according to Claim 1, **characterized in that** a periphery (4) of the closure element (1, 28) projects, in particular radially with respect to a central longitudinal axis (5) of the closure element (1, 28), beyond the receptacle (2, 29), the periphery (5) preferably being configured for holding the closure element (1, 28) on a joint housing (18).

3. Closure element according to either of the preceding claims, **characterized in that**, between the side (3) of the closure element (1, 28) and the receptacle (2, 29), there is formed a materially bonded connection, it in particular being the case that, between the side (3) of the closure element (1, 28) and the receptacle (2, 29), there is arranged an adhesion promoter and/or the side (3) of the closure element (1, 28) is, in the region intended for contacting with the receptacle (2, 29), pretreated by means of a plasma method.

4. Closure element according to one of the preceding claims, **characterized in that**, between the closure element (28) and the receptacle (29), there is formed a form-fitting connection, it in particular being the case that the form-fitting connection is realized by means of an undercut of the closure element (28).

5. Closure element according to Claim 4, **characterized in that** the side (3) of the closure element (28) has an elevation (30) which is T-shaped or mushroom-head-shaped in cross section, in particular arranged centrally with respect to a central longitudinal axis (5) of the closure element (1), the receptacle (29), for forming the form-fitting connection, preferably engaging into a groove (31) of the elevation (30) radially with respect to a central longitudinal axis (5) of the closure element (28).

6. Closure element according to Claim 4 or 5, **characterized in that**, in the closure element (1, 28), there is arranged at least one aperture through which there extends the plastic material of the receptacle (2, 29) for forming the form-fitting connection, and/or which is filled by means of the plastic material of the receptacle (2, 29).

7. Closure element according to one of the preceding claims, **characterized in that** the receptacle (2) is configured for interaction with a holding element (9) for fixing the electronic components (6) in the receptacle (2), it in particular being the case that the receptacle (2) and the holding element (9) are firmly connectable to one another by means of a latching connection and/or snap-action connection.

8. Closure element according to one of the preceding claims, **characterized by** formation as a closure cover or as a closure ring.

9. Ball joint with a closure element (1, 28) according to one of the preceding claims, having a joint housing (18), wherein the closure element (1, 28) is fixed in the joint housing (18), and having a joint inner part (17) which is mounted movably in the joint housing (18), wherein the side (3) of the closure element (1, 28) with the receptacle (2, 29) faces away from the joint inner part (17) and the receptacle (2, 29) has a U-shaped border and the electronic component (6) is inserted into the border (7).

## Revendications

1. Élément de verrouillage pour une rotule (16) dans un véhicule et présentant un logement (2, 29) destiné à agencer un composant électronique (6), l'élément de verrouillage (1) étant en métal et le logement (2, 29) étant en un matériau synthétique, le logement (2, 29) étant injecté sur une face (3) de l'élément de verrouillage (1), suite à quoi on obtient une pièce hybride constituée par au moins deux matériaux différents, la face (3) étant une surface ou un plan, **caractérisé en ce que** la face (3) de l'élément de verrouillage (1, 28) présentant le logement (2, 29) est réalisée comme une face externe, le logement (2, 29) présentant un pourtour (7) en forme de U et le composant électronique (6) étant inséré dans le pourtour (7).

2. Élément de verrouillage selon la revendication 1, **caractérisé en ce qu'**un pourtour (4) de l'élément de verrouillage (1, 28) dépasse au-delà du logement (2, 29), en particulier de manière radiale par rapport à un axe longitudinal central (5) de l'élément de verrouillage (1, 28), de préférence, le pourtour (5) est réalisé pour retenir l'élément de verrouillage (1, 28) sur un boîtier (18) d'articulation.

3. Élément de verrouillage selon l'une des revendications précédentes, **caractérisé en ce qu'**une liaison par matière est réalisée entre la face (3) de l'élément de verrouillage (1, 28) et le logement (2, 29), en particulier, un promoteur d'adhérence est agencé entre la face (3) de l'élément de verrouillage (1, 28) et le logement (2, 29) et/ou la face (3) de l'élément de verrouillage (1, 28) est prétraitée dans la zone prévue pour la mise en contact avec le logement (2, 29) au moyen d'un procédé au plasma.

4. Élément de verrouillage selon l'une des revendications précédentes, **caractérisé en ce qu'**une liaison par complémentarité de forme est réalisée entre l'élément de verrouillage (28) et le logement (29), en particulier, la liaison par complémentarité de forme est réalisée au moyen d'une contre-dépouille de l'élément de verrouillage (28).

5. Élément de verrouillage selon la revendication 4, **caractérisé en ce que** la face (3) de l'élément de verrouillage (28) présente une élévation (30) en forme de T ou en forme de tête de champignon en coupe transversale, agencée en particulier de manière centrale par rapport à un axe longitudinal central (5) de l'élément de verrouillage (1), de préférence le logement (29) pénètre dans une rainure (31) de l'élévation (30) pour la réalisation de la liaison par complémentarité de forme radialement par rapport à un axe longitudinal central (5) de l'élément de verrouillage (28).

6. Élément de verrouillage selon la revendication 4 ou 5, **caractérisé en ce qu'**au moins un passage est agencé dans l'élément de verrouillage (1, 28), à travers lequel s'étend le matériau synthétique du logement (2, 29) pour la réalisation de la liaison par complémentarité de forme et/ou qui est rempli au moyen du matériau synthétique du logement (2, 29).

7. Élément de verrouillage selon l'une des revendications précédentes, **caractérisé en ce que** le logement (2) est réalisé pour une coopération avec un élément de retenue (9) pour la fixation du composant électronique (6) dans le logement (2), en particulier, le logement (2) et l'élément de retenue (9) peuvent être reliés solidement l'un à l'autre au moyen d'une liaison par encliquetage et/ou à déclic.

8. Élément de verrouillage selon l'une des revendications précédentes, **caractérisé par** une réalisation en tant que couvercle de verrouillage ou de bague de verrouillage.

9. Rotule présentant un élément de verrouillage (1, 28) selon l'une des revendications précédentes, présentant un boîtier (18) d'articulation, l'élément de verrouillage (1, 28) étant fixé dans le boîtier (18) d'articulation, et présentant une partie interne (17) d'articulation, qui est logée mobile dans le boîtier (18) d'articulation, la face (3) de l'élément de verrouillage (1, 28) présentant le logement (2, 29) étant orientée à l'opposé de la partie interne (17) d'articulation et le logement (2, 29) présentant un pourtour en forme de U et le composant électronique (6) étant inséré dans le pourtour (7).
